# EUROPÄISCHE PATENTANMELDUNG

(11) **EP 2 624 192 A1**
(43) Veröffentlichungstag der Anmeldung: **07.08.2013**
(21) Anmeldenummer: 12000646.5
(22) Anmeldetag: 01.02.2012
(51) Int. Cl.: G06Q 30/02

(54) **Serverbasiertes Informationssystem**

(71) Anmelder: wdv Gesellschaft für Medien & Kommunikation mbH & Co. KG, 61362 Bad Homburg v.d.H. (DE)
(72) Erfinder: Kuhn, Thomas, DE-63071 Offenbach (DE)
(74) Vertreter: Tergau & Walkenhorst

(57) **Zusammenfassung**

Ein Server-basiertes Informationssystem, welches wenigstens eine Schnittstelle zu einem Medienkanal aufweist, in dem Konsumenten Inhalte bereitgestellt werden, soll die Qualität von bereitgestellten Inhalten, insbesondere im Hinblick auf die Konsumenteninteressen, gegenüber dem Stand der Technik verbessern. Dazu sind eine clientseitige Redaktionsschnittstelle (92) zur Interaktion mit einem Redakteur vorgesehen und technischen Mittel zur Durchführung der Verfahrensschritte:
1. Erstellen eines Konsumentenprofils für den jeweiligen Konsumenten, wobei jedem Konsumenten eine Anzahl von Konsumentenattributen zuordenbar ist
2. Bereitstellen einer Eingabemaske (180) in der Redaktionsschnittstelle (92) zum Entgegennehmen einer Eingabe wenigstens eines Konsumentenattributes
3. Erstellen einer Profilliste von Konsumentenprofilen, auf die dieses wenigstens Konsumentenattribut zutrifft und Bereitstellung der Profilliste in der Redaktionsschnittstelle (92)
4. Bereitstellung einer Eingabemaske (216) in der Redaktionsschnittstelle (92) zum Entgegennehmen einer Eingabe wenigstens eines Themas
5. Erstellen einer Inhaltsliste von Inhalten, auf die dieses wenigstens eine Thema zutrifft und Bereitstellung der Inhaltsliste in der Redaktionsschnittstelle (92)
6. Bereitstellen einer Eingabemaske (228) zur Verknüpfung der Profilliste und der Inhaltsliste in der Redaktionsschnittstelle (92)
7. Ausgabe, insbesondere in dem jeweiligen Mediankanal, der Inhalte der Inhaltsliste basierend auf dieser Verknüpfung für die Konsumenten mit Konsumentenprofilen in der Profilliste

## Beschreibung

Die Erfindung betrifft ein Server-basiertes Informationssystem, welches wenigstens eine Schnittstelle zu einem Medienkanal aufweist, in dem Konsumenten Inhalte bereitgestellt werden.

Die Bereitstellung von Informationen für Konsumenten in Medienkanälen wie beispielsweise Webseiten ist in der modernen Medienlandschaft eine wesentliche Aufgabe. Dabei können z.B. generische Informationen für im Wesentlichen jeden Konsumenten des Mediankanals bereitgestellt werden. Aufgrund der unterschiedlichen Interessensschwerpunkte und der zunehmenden Zahl von Inhalten ist es im Laufe der Zeit aber immer wichtiger geworden, durch Informationssysteme Informationen zur Verfügung stellen zu können, die in irgendeiner Form auf den Konsumenten zugeschnitten sind. Dies geschieht zunehmend aufgrund der Fülle der Konsumenten und der Angebote in automatisierter Form.

Eine spezielle Form derartiger Informationssysteme sind Empfehlungssysteme, die heutzutage in vielen elektronisch zugänglichen Systemen, insbesondere im Internet, vielfältig Verwendung finden. Ihre allgemeine Aufgabenstellung besteht darin, den Konsumenten bzw. Verbraucher in dem Auffinden und Auswählen von für ihn geeigneten oder ihn interessierenden Angeboten bzw. Inhalten zu unterstützen. Dadurch spart der Konsument Zeit, da er zum Auffinden neuer Angebote nicht "von Hand" alle Angebote selber durchsehen muss. Basierend auf gewissen Kriterien, die den Konsumenten und/oder andere Konsumenten bzw. Benutzer sowie die Angebote betreffen, werden auf diese Weise Angebote präsentiert und dadurch Empfehlungen ausgesprochen, die basierend auf den genannten Kriterien und deren Auswertung mit hoher Wahrscheinlichkeit für den Konsumenten interessant sein könnten. Empfehlungen sind also gewissermaßen Inhalte, deren Auswahl an den Interessen des Konsumenten ausgerichtet wurde. Ein derartiges Empfehlungssystem hat auch Vorteile für dessen Bereitsteller bzw. den Anbieter von Angeboten und Inhalten, da die Wahrscheinlichkeit, dass der Konsument interessante Angebote übersieht, reduziert, und die Chance, dass der Konsument Inhalte konsumiert, erhöht werden kann.

Für die Algorithmen und Methoden, die in derartigen Systemen für die Generierung von Empfehlungen für den jeweiligen Konsumenten eingesetzt werden, gibt es im Stand der Technik unterschiedliche Ansätze und Lösungen. So finden beispielsweise die Methoden des kollaborativen Filterns (collaborative filtering, CF) und inhaltsbasierten Filterns (content-based filtering, CB) Verwendung. Letztere Methode empfiehlt Verbrauchern Angebote basierend auf den dem System bekannten Attributen und Interessen des Konsumenten bzw. Benutzers und inhaltsbezogenen Eigenschaften der entsprechenden Angebote. Dem System müssen dazu gewisse Informationen über den Benutzer und inhaltsbezogene Aspekte des jeweiligen Angebots vorliegen. Nachteilig dabei ist, dass diese Methode sehr sensitiv auf die entsprechenden Informationen des Benutzers reagiert und Empfehlungen von Angeboten, die der Benutzer nicht unmittelbar oder der Art nach nicht kennt, nicht möglich sind.

Das kollaborative Filtern dagegen basiert auf dem Konzept, dass für Benutzer bzw. Konsumenten, deren Interessen ähnlich liegen (dies spiegelt sich in den entsprechenden Benutzerprofilen anhand der bisher ausgewählten Angebote wider) Artikel interessant sein könnten, die die entsprechenden anderen Benutzer bereits ausgewählt haben. Vorteilhaft dabei ist, dass bei dieser Methode keine inhaltlichen Aspekte der Angebote benötigt und mit den Interessen des Benutzers korreliert werden müssen. Damit ein Benutzer mit anderen Benutzerprofilen verglichen werden kann, muss dieser aber zuerst eine gewisse Menge von Angeboten ausgewählt bzw. bewertet haben, so dass Empfehlungen für einen neuen Nutzer des Systems Schwierigkeiten bereiten.

Ein wichtiger Aspekt der oben beschriebenen Empfehlungssysteme liegt in dem Automatisierungsgrad der Erstellung von Empfehlungen. Beispielsweise gibt es Systeme, die vollautomatisch funktionieren und anhand von Ähnlichkeitsrelationen und/oder Musteranalysen Empfehlungen für Benutzer aufgrund seines bisherigen Verhaltens im System generieren. Bei anderen Systemen wird zumindest während einer ersten Systemkonfiguration mit dem System manuell interagiert. Ein hybrides Empfehlungssystem, welches eine manuelle Eingabe bzw. Definition von anfänglichen Stereotypen vorsieht, ist beispielsweise aus der EP 1 906 316 A1 bekannt.

Der Erfindung liegt die Aufgabe zugrunde, ein Informationssystem der eingangs genannten Art bereitzustellen, bei dem die Qualität von bereitgestellten Inhalten, insbesondere im Hinblick auf die Konsumenteninteressen, gegenüber dem Stand der Technik verbessert wird.

Diese Aufgabe wird erfindungsgemäß gelöst mit einer clientseitigen Redaktionsschnittstelle zur Interaktion mit einem Redakteur, und mit technischen Mitteln zur Durchführung der Verfahrensschritte:
1. Erstellen eines Konsumentenprofils für den jeweiligen Konsumenten, wobei jedem Konsumenten eine Anzahl von Konsumentenattributen zuordenbar ist
2. Bereitstellen einer Eingabemaske in der Redaktionsschnittstelle zum Entgegennehmen einer Eingabe wenigstens eines Konsumentenattributes
3. Erstellen einer Profilliste von Konsumentenprofilen, auf die dieses wenigstens Konsumentenattribut zutrifft und Bereitstellung der Profilliste in der Redaktionsschnittstelle
4. Bereitstellung einer Eingabemaske in der Redaktionsschnittstelle zum Entgegennehmen einer Eingabe wenigstens eines Themas
5. Erstellen einer Inhaltsliste von Inhalten, auf die dieses wenigstens eine Thema zutrifft und Bereitstellung der Inhaltsliste in der Redaktionsschnittstelle
6. Bereitstellen einer Eingabemaske zur Verknüpfung der Profilliste und der Inhaltsliste in der Redaktionsschnittstelle
7. Ausgabe, insbesondere in dem jeweiligen Mediankanal, der Inhalte der Inhaltsliste basierend auf dieser Verknüpfung für die Konsumenten mit Konsumentenprofilen in der Profilliste

Vorteilhafte Ausgestaltungen der Erfindung sind Gegenstand der Unteransprüche.

Die Erfindung geht von der Überlegung aus, dass das heutige in vielen Lebensbereichen extrem umfangreiche Angebot an Inhalten für den Konsumenten zielgerichtete und personalisierte Bereitstellungen von ihn möglicherweise interessierenden Inhalten bzw. Empfehlungen erfordert. Darin sollten direkt die Interessen bzw. Vorlieben bzw. seine Interaktionen mit vorhandenen angebotenen Inhalten eingehen. Eine derartige personalisierte Bereitstellung von Inhalten lässt sich mit rein musterorientierten Methoden bzw. Algorithmen nicht oder nur sehr unvollkommen erreichen.

Wie nunmehr erkannt wurde, kann eine zielgerichtete und personalisierte Bereitstellung von Inhalten erreicht werden, indem das Inhaltssystem eine Interaktion von Experten bzw. Redakteuren vorsieht, die auf manuelle Weise dem System Kriterien vorgeben können, nach denen die Empfehlungen generiert werden sollen. Damit diese Empfehlungen möglichst ein direktes Abbild der (Konsumenten-) Realität werden, sollte die Interaktion des Redakteurs mit dem System mehr als nur eine anfängliche bzw. vorbereitende Definition von beispielsweise Stereotypen umfassen. Der Redakteur, der im Rahmen dieser Anmeldung im weitesten Sinne eine Person ist, die mit dem Informationssystem über die Redaktionsschnittstelle interagiert (die Bezeichnung "Redakteur" bezeichnet somit seine Rolle bzw. Funktion, auf eine Berufsausbildung als Redakteur kommt es nicht an), sollte dabei vielmehr manuell die Auswahl bzw. Endkontrolle sowohl über die für den bereit gestellten Inhalt ausgewählten Konsumenten bzw. Benutzer als auch über die Inhalte haben, so dass keine mustergenerierten Inhalt bereitgestellt werden, die den Interessen des Konsumenten nicht oder nur unzureichend entsprechen. Andererseits sollte das Informationssystem dem Redakteur so viel Arbeit wie möglich abnehmen, so dass das manuelle Eingreifen zielgerichtet und effizient erfolgen kann.

Den oben genannten Anforderungen an die Qualität der bereitgestellten Inhalte kann dadurch genüge getan werden, dass diese Inhalte nicht starr regelbasiert generiert werden, sondern dass für die Bereitstellung der personalisierten Inhalte sowohl Benutzer als auch Inhalte in intelligenter Weise zu Gruppen zusammengefasst bzw. aufgrund von durch den Redakteur vorgegebenen Kriterien gefiltert werden. Auf diese Weise können nach von dem Redakteur vorgegebenen Kriterien die Konsumenten interaktiv und dynamisch zu Konsumentengruppen bzw. Profilgruppen zusammengefasst werden, für die der Redakteur einen Inhalt aus einem gewissen Themenbereich vorsieht. In ähnlicher Weise können durch vorgegebene Kriterien bzw. Regeln einzelne Angebote bzw. Inhalte aus diesem Themenbereich in einer Inhaltsliste zusammengestellt werden. Das heißt, die Auswahl dieser Kriterien erfolgt über den Redakteur, während das System diese Kriterien in intelligente Regeln umsetzt und aufgrund dieser Kriterien die entsprechenden Listen zusammenstellt. Dies bedeutet, im Gegensatz zu bekannten Systemen werden Regeln nicht unmittelbar zur Bereitstellung der Inhalte, sondern im Vorfeld zur Generierung der Profil- und Inhaltslisten eingesetzt. Es wird somit durch das gezielte Eingreifen von Redakteuren in den Prozess der Bereitstellung von Inhalten die Möglichkeit für einen kreativen Prozess geschaffen, in dem eine intelligente und gezielte Generierung von auf den jeweiligen Konsumenten zugeschnittenen Inhalten erfolgt.

Der Redakteur kann nun die beiden Listen, d. h. die Profilliste und die Inhaltsliste, verknüpfen, was bedeutet, dass alle Konsumenten dieser Konsumentenprofilliste die entsprechenden Inhalte erhalten. Durch diese Kombination von manuellen Eingriffen und Aktionen des Informationssystems können durch die Kontrolle des Redakteurs einerseits Inhalte - bevorzugt in dem jeweiligen Mediankanal - ausgegeben werden, die dem tatsächlichen Nutzerverhalten entsprechen. Andererseits können durch die gleichzeitige Bereitstellung bzw. Empfehlung an alle Konsumenten bzw. Nutzer in der entsprechenden Profilliste an viele Nutzer gleichzeitig Inhalte ausgegeben werden.

Ein derartiges System ist aufgrund seiner Konsumenten- und Inhaltszentriertheit flexibel einsetzbar, es können Inhalte ganz unterschiedlicher Form, wie beispielsweise Anzeigen oder Produkte, insbesondere in Form von Empfehlungen, dem Konsumenten bereitgestellt werden. Bereitgestellte Inhalte können beispielsweise Texte, multimediale Dateien wie Sounddateien, Bilder, Videos, Flash-Filme, oder ganze Webseiten sein.

Grundlage für die Zusammenstellung einer Profilliste von Konsumentenprofilen sind dabei die Konsumentenattribute, beispielsweise Alter, Geschlecht, geografische Angaben, Interessen usw.. Vorteilhafterweise werden die Interaktionen eines Konsumenten mit den in einem Medienkanal bereitgestellten Inhalten, insbesondere die Auswahl von Themen, verfolgt und/oder protokolliert, wobei diese Interaktion neben den Attributen zur Erstellung der Profilliste verwendet werden. Durch seine Interaktionen verrät er nämlich seine Interessensschwerpunkte und Vorlieben.

Beispielsweise können neben Alter und Geschlecht als Kriterien auch seine Verhaltensweisen in Bezug auf die angebotenen Inhalte verwendet werden, z.B. die Tatsache dass der Konsument eine vorgegebene Anzahl von Interaktionen in sportlichen Angeboten hatte bzw. die ausgewählten konkreten sportlichen Angebote an sich. Dies kann bedarfsweise noch weiter verfeinert werden, so dass nur alle sportlichen Angebote berücksichtigt werden, die sich auf Outdoor-Aktivitäten beziehen. Das Informationssystem bietet hierbei eine große Flexibilität gegenüber Lösungen im Stand der Technik, da diese Interaktionen nicht nur auf eine gewisse Kategorie von Interaktionen bzw. Angeboten beschränkt sein müssen. Beispielsweise können nicht nur Produktbewertungen oder das Anklicken von Anzeigen berücksichtigt werden, sondern auch andere Aktionen, wie Anklicken eines Artikels, Ansehen eines Videos auf Webseiten oder Anforderungen von Informationen über eine Postkarte, die einem Printmedium beilag.

Das Informationssystem kann beispielsweise als Empfehlungssystem ausgestaltet sein, wobei die von ihm ausgegebenen Inhalte Empfehlungen, insbesondere von Angeboten, für den jeweiligen Konsumenten sind. Diese richten sich dabei vorteilhafterweise nach den Konsumentenattributen und bevorzugt auch nach seinen Interessen. Das Informationssystem kann auch zu anderen Zwecken eingesetzt werden, beispielsweise erlaubt es die konsumentenoptimierte Bereitstellung von Informationen bzw. Inhalten, die keine Angebote bzw. Empfehlungen für Angebote darstellen. Als Beispiel seien Informationen bzw. Inhalte in Form von Aktienkursen genannt, die in Abhängigkeit von den entsprechenden Konsumentenattributen und/oder seinen bisherigen Interaktionen bereitgestellt werden.

Vorteilhafterweise werden die Inhalte dem Nutzer bzw. Konsumenten während der aktuellen Sitzung und/oder beim nächsten Interagieren mit dem entsprechenden Mediankanal bereitgestellt, sofern dies medienseitig möglich ist wie beispielsweise bei einer Webseite. Dies betrifft nicht Medien wie beispielsweise einen Newsletter oder ein regelmäßig erscheinendes Printmedium, in denen der Konsument entsprechende Inhalte bzw. Angebote beim nächsten Erscheinungstermin des entsprechenden Mediums erhält.

Vorteilhafterweise verfolgt und/oder protokolliert das Informationssystem die Interaktionen eines Konsumenten mit in einem Medienkanal bereitgestellten Inhalten, insbesondere die Auswahl von Themen, und stellt diese Interaktionen neben den Konsumentenattributen zur Erstellung der Profilliste bereit. Dadurch wird dem Redakteur die Möglichkeit gegeben, auf die bis zu diesem Zeitpunkt offenbarte Interessenlage der Konsumenten Rücksicht zu nehmen und dementsprechend die Inhalte für die Inhaltsliste auszuwählen.

Um möglichst früh gewisse Informationen über einen Konsumenten zu erhalten, so dass auch zu einem frühen Zeitpunkt Inhalte bereitgestellt werden können, wird eine Anzahl von Konsumentenattributen, insbesondere Alter und Geschlecht, vorteilhafterweise bereits beim erstmaligen Kontakt des Konsumenten mit einem der Medienkanäle von dem Informationssystem erfasst. Des Weiteren kann dem Konsumenten, beispielsweise über eine Webseite, durch eine Beantwortung von Ja/Nein-Fragen bzw. von anklickbaren Optionen schon zu diesem Zeitpunkt die Möglichkeit gegeben werden, zumindest im groben Maße seine Interessenschwerpunkte anzugeben. Diese Option wird dem Konsumenten vorteilhafterweise auch später bei Bedarf bzw. wenn er es wünscht zur Verfügung gestellt. Auf diese Weise kann er auch seine Interessensschwerpunkte verändern, wenn er beispielsweise nicht mehr an Outdoor-Aktivitäten interessiert ist sondern beginnt, sich für Hallensportarten zu interessieren. Diese neuen bzw. geänderten Attribute werden im System abgespeichert und können bereits bei der nächsten Bereitstellung von Inhalten berücksichtigt werden.

Um flexible und intelligente Zusammenfassungen bzw. Zusammenstellungen von Themen in Inhaltslisten und Konsumentenprofilen in Profillisten zu ermöglichen, werden vorteilhafterweise jeweils verschiedene Konsumentenattribute zur Bildung der Profilliste und/oder jeweils verschiedene Themenattribute zur Bildung der Inhaltsliste logisch und/oder regulär mit Hilfe des Informationssystems miteinander verknüpft. Eine derartige Verknüpfung wäre beispielsweise: männlich, Alter zwischen 25 und 35 Jahren, und Interesse an Outdoor-Aktivitäten, aber kein Interesse an Outdoor-Motorsport. Weitere vorteilhafte Kriterien der Profilliste können über die Zugehörigkeit oder Nichtzugehörigkeit zu anderen Profillisten gebildet werden.

Dazu ist vorteilhafterweise vorgesehen, dass einmal gebildete Profillisten, d. h. die zur Bildung der Profilliste ausgewählten Attribute bzw. Interaktionsverhalten, im System abgespeichert werden können. Bei neu hinzu kommenden Konsumenten werden diese Listen vorzugsweise dynamisch von dem Informationssystem aktualisiert, so dass diese Listen als intelligente Listen fungieren. Beispielsweise könnte eine Profilliste alle männlichen Nutzer bzw. Konsumenten im Alter von 25 bis 35 Jahren enthalten, so dass eine neue Profilliste erstellt werden könnte mit den Kriterien: Interesse an Outdoor-Aktivitäten und Mitglied der eben genannten Profilliste. Auf diese Weise können, ohne Mehrarbeit zu produzieren, zeiteffizient Profillisten erstellt und für die Bereitstellung von Inhalten genutzt werden.

Die Darstellung und Aufbereitung der Inhalte werden zur Generierung eines optimierten Nutzererlebnisses von dem Informationssystem vorteilhafterweise an den jeweiligen Medienkanal bzw. dessen Auslegung angepasst. Dies kann in mehrerlei Hinsicht geschehen. Beispielsweise kann ein bestimmter Inhalt in einem Printmedium als Text und/oder Bild dargestellt werden, während er auf einer Webseite in dieser Form oder auch als Flash-Film oder Animation aufbereitet werden kann. Gleichermaßen werden vorteilhafterweise auch die technischen Dimensionierungen des entsprechenden Mediums berücksichtigt. Dies kann sich auch auf die Eigenschaften der Endgeräte beziehen, durch die dieses Medium konsumiert wird.

Das heißt, für eine Webseite kann auch eine mobile Version für Smartphones bzw. Tablet-Computer bereitgestellt werden, und die Inhalte können an den entsprechenden Prozessor und die Speicherdimensionierung dieser Geräte und/oder die Bandbreite einer vorliegenden Internetverbindung angepasst werden, beispielsweise durch Wahl einer geringeren Auflösung von grafischen Inhalten, einer stärkeren Datenkomprimierung, oder auch das gezielte Weglassen von Informationen.

Vorteilhafterweise werden intelligente Profillisten und/oder Inhaltslisten erstellt, die aufgrund wenigstens einer vorgegebenen Verknüpfung fortlaufend aktualisiert werden. Es ist vorteilhafterweise auch die Erstellung von statischen bzw. manuellen Inhaltslisten vorgesehen, welche sich nach ihrer Erstellung nicht dynamisch aufgrund von neu hinzukommenden Themen aktualisieren.

Das Informationssystem weist vorzugsweise eine Schnittstelle und Mittel zur Einspeisung und Kategorisierung von Inhalten auf.

Für eine komfortable und intuitive Interaktion mit dem Informationssystem ist die Redaktionsschnittstelle vorteilhafterweise webbrowserbasiert ausgeführt. Durch die modernen statischen und dynamischen Techniken im World Wide Web können dazu benutzerfreundliche und intuitiv bedienbare grafische Benutzerinterfaces bzw. Graphical User Interfaces (GUI) erzeugt werden. Der Redakteur kann sich vorteilhafterweise über das Internet von einem beliebigen Computer in dem Informationssystem mit Hilfe eines Webbrowsers über eine geschützte Verbindung, die den gesetzlichen Datenschutzbestimmungen genügt, beispielsweise einen VPN-Tunnel, einloggen, so dass kein speziell dafür vorgesehener Client bzw. eine entsprechende Applikation nötig ist. Eine derartige als eigenständiges Programm ausgeführte Schnittstelle kann alternativ oder in Kombination dazu vorgesehen sein.

Vorteilhafterweise ist eine Datenbank für die Speicherung der den auszugegebene Inhalten zugrundeliegenden Daten (beispielsweise die entsprechenden Verknüpfungen von Profillisten und Inhaltslisten) und der Inhalte vorgesehen. Dazu eignet sich beispielsweise eine Oracle Datenbank oder eine in SQL implementierte Datenbank.

Vorteilhafterweise ist eine Mehrzahl von Schnittstellen zu, insbesondere unterschiedlichen, Mediankanälen vorgesehen. Heutzutage interagieren Konsumenten mit unterschiedlichen Medien bzw. Medienkanälen, wie beispielsweise Webseiten, Newslettern und Printmedien. Um entsprechend effektiv Informationen über die Interessen des Konsumenten zu sammeln und ihm darauf aufbauend Empfehlungen zu geben, sollten möglichst medienübergreifend Informationen über den Konsumenten gebündelt werden und die entsprechenden Empfehlungen auch in allen von dem Konsumenten genutzten Medien bereitgestellt werden können. Der Konsument bzw. Benutzer ist hierbei der Endbenutzer oder Endkunde, welcher die Angebote bzw. Empfehlungen erhält. Die Schnittstellen sind dabei vorzugsweise jeweils an den entsprechenden Medienkanal angepasst bzw. in optimierter Weise ausgelegt. Dadurch wird das System zu einer Crossmedialität ertüchtigt, so dass diese Inhalte in verschiedenen, von dem Benutzer konsumierten Medien bereitgestellt werden können und entsprechend der Ausgestaltung des Mediums auch in ihrer Form optimiert werden können, so dass der Nutzer auf verschiedenen Kanälen die Empfehlung in jeweils optimierter Darstellung erhalten kann. Diese Schnittstellen übermitteln die Empfehlung in einem dafür vorgesehenen bzw. geeigneten Format. Dazu kann auch vorgesehen sein, dass diese Formatumwandlung direkt in dieser Schnittstelle geschieht. Alternativ dazu kann eine solche Umwandlung auch vorher geschehen, so dass in der Schnittstelle höchstens noch geringere Anpassungen bzw. Aufbereitungen, wie beispielsweise Kompression, durchgeführt werden müssen.

Das beschriebene Informationssystem ermöglicht in besonderer Weise die Berücksichtigung der Vorlieben und Interessen des Konsumenten und damit die Bereitstellung von auf die Person des Konsumenten zurechtgeschnittenen Inhalten. Aus datenschutzrechtlichen Bestimmungen sollte aber während des Prozesses der Auswahl und Bereitstellung von Inhalten die wahre Identität des Benutzers bzw. Konsumenten nicht bekannt werden. Mit anderen Worten, in dem Informationssystem muss die Identität des Konsumenten, also beispielsweise sein Name, nicht bekannt sein. Diese wird zur Erstellung einer Profilliste auch gar nicht benötigt, da nur eine eineindeutige Zuordnung zwischen Kennung und Konsumentenprofil notwendig ist. Vorteilhafterweise ist daher ein Anonymisierungsmodul vorgesehen, welches für einen Konsumenten eine Konsumentenkennung generiert und diese dem Konsumentenprofil zuordnet, wobei ausschließlich diese Konsumentenkennung für alle Operationen mit dem Konsumentenprofil und das Verfolgen der Konsumenteninteraktionen verwendet wird. Das heißt, alle Konsumentenattribute sowie die Interaktionen dieses Konsumenten mit den dem Informationssystem zugeordneten Medienkanälen werden unter der Konsumentenkennung geführt bzw. im Zusammenhang mit dieser Konsumentenkennung abgespeichert. Da diese Konsumentenkennung in eindeutiger Weise dem Konsumenten zugeordnet ist, können auch die dieser Konsumentenkennung zugeordneten Inhalte dem Konsumenten bereitgestellt werden. Der Konsument hat zwar beispielsweise bei der Interaktion mit bzw. beim Registrieren auf einer Webseite seinen Namen angegeben. Dieser wird aber zur Generierung von Empfehlungen von dem Informationssystem nicht benötigt und ist dort u.a. aus datenschutzrechtlichen Gründen nicht vorgesehen. Im Informationssystem werden vielmehr anonymisierte bzw. pseudonyme Profile verwendet, wobei die einzelnen Konsumenten durch die jeweilige Konsumentenkennung identifiziert werden.

Das Anonymisierungsmodul ordnet vorteilhafterweise jedem Konsumentenprofil eine Anzahl von Schlüsselwerten, welche insbesondere Konsumentenattribute umfassen, zu, wobei Konsumentenprofile, bei denen eine vorgegebene Anzahl von Schlüsselwerten übereinstimmt, zusammengefasst werden und eine identische Konsumentenkennung erhalten. Diese Funktionalität ermöglicht die Zusammenfassung von Konsumentenidentitäten, die der Konsument bei unterschiedlichen Medien eingerichtet bzw. verwendet hat.

Beispielsweise hat er sich bei einem Newsletter angemeldet, er bezieht ein Printmagazin und benutzt regelmäßig eine Webseite. Beim erstmaligen Besuch bzw. Benutzung dieser Medien wurde jeweils ein Konsumentenprofil angelegt, so dass de facto drei Konsumentenprofile, die zu dem gleichen Konsumenten gehören, im Empfehlungssystem vorliegen können. Damit aber die Interaktionen in crossmedialer Weise genutzt werden können, d. h. zum Beispiel Feedback, das der Konsument bei dem Printmedium über das Rücksenden einer Postkarte abgegeben hat, Anklicken verschiedener Inhalte auf der Webseite, sowie das Bestellen des Newsletters in der Zukunft, für die Bereitstellung einer neuen Empfehlung gleichermaßen benutzt werden können, werden Konsumentenprofile des gleichen Konsumenten vorteilhafterweise zusammengeführt. Dies erfolgt über die Übereinstimmung einer vorgegebenen Anzahl von Schlüsselwerten, beispielsweise Alter, Adresse und Name.

In einigen Fällen ist eine Dechiffrierung der Konsumentenkennung, d. h. die Rückumwandlung in die Identität des Konsumenten und der Zugriff auf Informationen des Konsumentenprofils, notwendig. Dies ist zum Beispiel der Fall, wenn ein Printmedium in personalisierter Form, d. h. mit auf diesen Konsumenten zugeschnittenen Empfehlungen, an ihn bzw. an seine Adresse versendet werden soll. Zur Realisierung der bedarfsweisen Rücktransformation bzw. Rückumwandlung oder Rückzuordnung einer Konsumentenkennung für einen Konsumenten ist daher vorteilhafterweise ein Deanonymisierungsmodul vorgesehen, welches bei Bedarf das zu der Konsumentenkennung korrespondierende Konsumentenprofil bereitstellt.

Die Vorteile der Erfindung liegen insbesondere darin, dass durch die Bereitstellung einer Redaktionsschnittstelle im System und die (intelligente) Erstellung von Profillisten und Inhaltslisten, die zur Bereitstellung von Inhalten miteinander verknüpft werden, Inhalte bereitgestellt werden können, die in ihrer Abgestimmtheit auf den Konsumenten Inhalten, die auf automatischer Mustergenerierung beruhen, übertreffen. Durch Schnittstellen zu unterschiedlichen Medienkanälen kann das System cross-medial ausgelegt werden, so dass Konsumenten in unterschiedlichen Mediankanälen Inhalte bereitgestellt werden können und als Grundlage dafür auch die Interaktionen in all diesen Kanälen verwendet werden können. Durch ein Anonymisierungsmodul können datenschutzrechtliche Bestimmungen erfüllt werden, wobei die Identität des Konsumenten im Informationssystem nicht bekannt sein muss. Die Identität des Konsumenten kann bei Bedarf durch ein Deanonymisierungsmodul bereitgestellt werden.

Ein Ausführungsbeispiel der Erfindung wird anhand einer Zeichnung näher erläutert. Darin zeigen in stark schematisierter Darstellung:
- FIG. 1: ein Ablaufdiagramm von zur Generierung einer Empfehlung vorgesehenen Verfahrensschritten, die von einem in einer bevorzugten Ausführungsform als Empfehlungssystem ausgestalteten Informationssystem durchgeführt werden,
- FIG. 2: eine Darstellung der Systemarchitektur des Empfehlungssystems gemäß Fig. 1 mit einer Mehrzahl von Modulen und Schnittstellen,
- FIG. 3: eine Eingabemaske in einer Redaktionsschnittstelle des Empfehlungssystems aus FIG. 1 und FIG. 2 zur Erstellung einer Profilliste,
- FIG. 4: eine Ausgabe mit einer Vorschau für eine Profilliste,
- FIG. 5: eine Eingabemaske in der Redaktionsschnittstelle zur Erstellung einer Inhaltsliste,
- FIG. 6: eine Ausgabe mit einer Vorschau für eine Inhaltsliste, und
- FIG. 7: eine Maske zur Erstellung einer Empfehlung in der Redaktionsschnittstelle.

Gleiche Teile sind in allen Figuren mit denselben Bezugszeichen versehen.

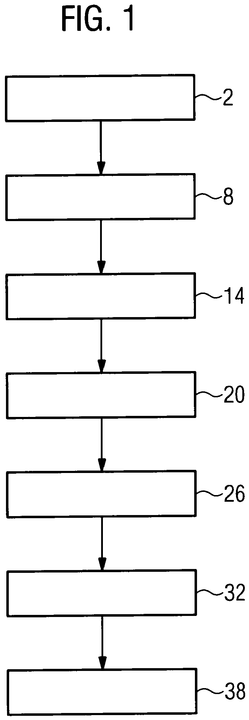

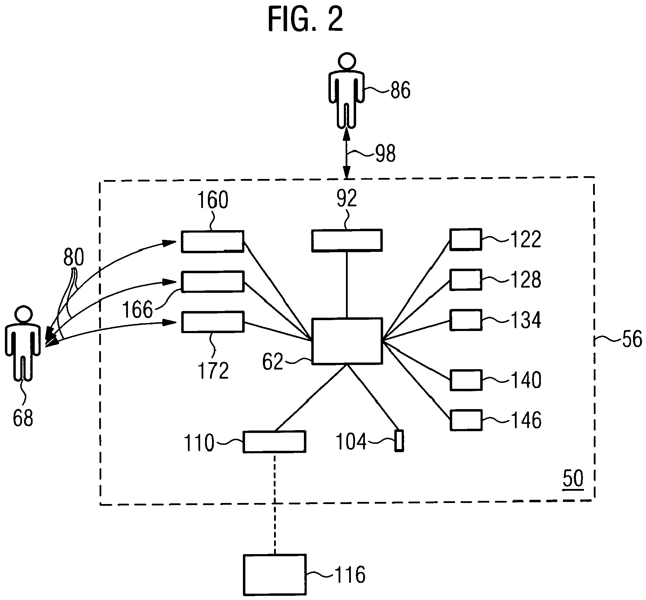

Das Ablaufdiagramm in FIG. 1 stellt schematisch die Verfahrensschritte dar, die von einem serverbasierten Informationssystem, welches als Empfehlungssystem ausgestaltet ist, mit einer in FIG. 2 dargestellten Systemarchitektur durchgeführt werden, um Inhalte bereitzustellen und damit eine Empfehlung zu generieren. Sie definieren auf diese Weise ein Verfahren zur Bereitstellung von Empfehlungen für Konsumenten über eine Mehrzahl von Medienkanälen wie beispielsweise Webseiten, Newsletter oder Printmedien. Die in FIG. 1 dargestellten Verfahrensschritte müssen nicht in der dargestellten Reihenfolge durchgeführt werden. Vielmehr können auch gewisse Verfahrensschritte parallel zu anderen oder in wiederholter Weise durchgeführt werden. Weiterhin kann sich auch die Reihenfolge der einzelnen Verfahrensschritte im Bedarfsfall ändern.

In Block 2 wird für einen Medienkonsumenten bzw. Konsumenten, der sich mit einem mit dem Empfehlungssystem zugeordneten Medienkanal erstmalig verbindet, ein Konsumentenprofil angelegt. Dazu werden Konsumentenattribute entgegengenommen, wie beispielsweise Alter, Geschlecht, und gegebenenfalls andere Attribute wie Berufstätigkeit oder Freizeitinteressen. Es ist vorteilhafterweise vorgesehen, dass auch bei späteren Interaktionen das Konsumentenprofil angepasst, verändert, erweitert oder im Bedarfsfall auch gelöscht werden kann.

In Block 8 wird einem Redakteur, der sich mit dem Empfehlungssystem an einer Redaktionsschnittstelle verbindet, eine Eingabemaske bereitgestellt, in der der Redakteur eine Anzahl von Konsumentenattributen auswählen und eingeben bzw. festlegen kann. Beispielsweise kann die Eingabe einen einzelnen Wert umfassen, sie kann aber auch eine Aufzählung oder einen Wertebereich (bsp. Alter zwischen 30 und 40 Jahren) umfassen. Zusätzlich dazu können auch weitere Kriterien verwendet werden, wie beispielsweise die Zugehörigkeit oder Nichtzugehörigkeit zu einer anderen Profilliste, oder die Interaktion mit gewissen Inhalten bzw. Angeboten (Anklicken, Starten von Filmen, Abonnieren von Newslettern usw.).

In Block 14 erstellt das Empfehlungssystem eine Profilliste. Diese Profilliste enthält diejenigen Profile von Konsumenten, auf die das oder die in Block 8 festgelegten Attribute von Konsumenten zutreffen. Das heißt, alle Konsumenten, die dieses Attribut/diese Attribute in ihrem Profil haben bzw. auf die das Attribut zutrifft und auf die ggf. auch die anderen Kriterien zutreffen, werden in dieser Profilliste abgelegt. Beispielsweise kann eine derartige Profilliste alle Frauen im Alter von 20 bis 40 Jahren enthalten. Es können zur Erstellung einer Profilliste ein oder mehrere Konsumentenattribute bzw. Attribute verwendet werden. Diese können logisch oder mit regulären Ausdrücken miteinander verknüpft werden. Beispielsweise können alle Frauen im Alter von 20 bis 40 Jahren, die nicht berufstätig sind, ausgewählt werden.

Wie oben dargelegt können für die Bildung bzw. Zusammenstellung der Profilliste auch andere Kriterien zusätzlich verwendet werden. Beispielsweise kann als Kriterium für die Zugehörigkeit zu der Profilliste gewählt werden, dass derjenige Benutzer sich Angebote zum Thema Wellness oder Kurzreisen angeschaut hat, beispielsweise diese angeklickt hat, entsprechende Webseiten aufgerufen hat oder Filme angeschaut hat. Damit geht unmittelbar das Nutzerverhalten, über das sich die Interessen des Nutzers ableiten lassen, in die Erstellung der Profilliste ein.

Die Profillisten können im Empfehlungssystem abgelegt werden, und bei der Erstellung einer neuen Profilliste kann Bezug auf bereits vorhandene Profillisten genommen werden. Beispielsweise kann als Kriterium für eine neue Profilliste dienen, dass die Profile, die zu der neuen Liste dazugehören sollen, in einer anderen Liste auch vorhanden sind. Gleichermaßen kann auch die Nichtzugehörigkeit in einer anderen Liste als Kriterium für die Aufnahme in der neu zu erstellenden Profilliste dienen. Durch die Interaktion eines Redakteurs mit dem System an dieser Stelle können also ganz gezielt gewisse Konsumenten- bzw. Nutzerkreise, auf die gewisse Attribute oder Kriterien, wie beispielsweise ihr Interaktionsverhalten mit Angeboten zutreffen, ausgewählt und zu einer Gruppe zusammengefasst werden. Dies ermöglicht dann in einem späteren Schritt eine zielgerichtete und personalisierte Ausgabe von Empfehlungen für diesen Nutzerkreis.

Nutzer werden also nicht aufgrund von Ähnlichkeitsrelationen oder Ähnlichem einer Gruppe zugeordnet, sondern das System stellt dem Redakteur eine Schnittstelle bereit, durch die dieser Redakteur in individueller Weise eine Profilliste von Nutzerprofilen erstellen kann. Diese Profilliste wird dem Redakteur in der Redaktionsschnittstelle dann zur Verfügung gestellt bzw. bereitgestellt, so dass der Redakteur beispielsweise die Anzahl der Profile in dieser Profilliste einsehen kann. Weiterhin wird ihm die Möglichkeit gegeben, diese Liste noch weiter zu bearbeiten, beispielsweise Kriterien herauszunehmen oder neue Kriterien einzufügen.

In Block 20 wird dem Redakteur in der Redaktionsschnittstelle eine Eingabemaske bereitgestellt, in der er wenigstens ein Thema eingeben kann. Das Empfehlungssystem kann zusätzlich auf eine Mehrzahl von Inhalten bzw. Angeboten zurückgreifen, die nach Themenkategorien kategorisierbar bzw. einstufbar sind. Beispielsweise kann der Redakteur als Thema an dieser Stelle Wellness angeben. Es können auch mehrere Themen verwendet werden, die mit logischen und/oder regulären Ausdrücken miteinander verknüpft werden können. Beispielsweise können alle Inhalte ausgewählt werden, auf die die Themen Wellness und Massage zutreffen. Die Themenkategorien erlauben eine Einschränkung der aufgefundenen Themen, beispielsweise hinsichtlich räumlicher und zeitlicher Angaben bzw. Verfügbarkeit (Postleitzahl, Angebotszeitraum) oder auch inhaltlicher Kriterien.

In Block 26 erstellt das Empfehlungssystem basierend auf dieser Auswahl von Themen und Themenkategorien eine Inhaltsliste von Themen. Auch diese Liste wird dem Redakteur bereitgestellt zur Einsicht bzw. zur weiteren Verarbeitung.

In Block 32 wird nun dem Redakteur eine Eingabemaske zur Verfügung gestellt, in der er die Profilliste mit der Inhaltsliste verknüpfen kann. Diese Verknüpfung bedeutet, dass den Konsumenten, deren Konsumentenprofil in der Profilliste hinterlegt ist, die entsprechenden Inhalte bzw. Themen der Inhaltsliste empfohlen werden sollen. Das Empfehlungssystem generiert in Block 38 die auf dieser Verknüpfung basierenden Empfehlungen und stellt diese Empfehlungen den Konsumenten in den entsprechenden Medienkanälen bereit.

Eine bevorzugte Realisierung des Empfehlungssystems im Sinne von Modulen, die jeweils eine gewisse Funktionalität implementieren, ist in FIG. 2 dargestellt. Die entsprechenden Module können hardware- und/oder softwaremäßig realisiert sein. Die Erfindung ist nicht auf die dargestellte modulmäßige Ausgestaltung beschränkt. Funktionalitäten verschiedener hier dargestellter Module können auch in einem gemeinsamen Modul realisiert werden oder auf andere Weise zusammengefasst werden. Gleichermaßen können auch hier dargestellte Funktionalitäten, die einem Modul zugeordnet sind, auf mehrere Module aufgeteilt sein.

Das in FIG. 2 dargestelltes Empfehlungssystem 50 umfasst Komponenten, die in dem gestrichelten Kasten 56 dargestellt sind. Zur Verbindung der einzelnen Module und Schnittstellen und zur allgemeinen Kommunikation ist ein Zentralmodul 62 vorgesehen.

Das System sieht eine Interaktion mit einem Redakteur 86 vor (natürlich kann auch eine Gruppe von Redakteuren vorgesehen sein), der sich mit dem Empfehlungssystem 50 durch eine Redaktionsschnittstelle 92 verbindet bzw. mit diesem interagiert (dargestellt durch einen Doppelpfeil 98). Die Interaktion des Redakteurs 86 mit dem Empfehlungssystem 50 geschieht während des Prozesses des Generierens von Empfehlungen. Zur persistenten Speicherung von Daten im Empfehlungssystem ist eine Datenbank 104 vorgesehen.

Das Empfehlungssystem 50 stellt den Konsumenten 68 in Medienkanälen Inhalte zur Verfügung bzw. empfiehlt sie ihnen. Diese Inhalte sind in einem Inhaltssystem 116, welches im vorliegenden Ausführungsbeispiel nicht Teil des Empfehlungssystems 50 ist, hinterlegt, Das Empfehlungssystem 50 kann über eine Inhaltsschnittstelle 110 auf diese Inhalte zugreifen und sie bei Bedarf abrufen und in der Benutzerschnittstelle 74 bzw. auch in der Redaktionsschnittstelle 92 darstellen. In einer alternativen Ausgestaltung des Empfehlungssystems 50 ist das Inhaltssystem 116 eine der Komponenten des Empfehlungssystems 50. Das Inhaltssystem 116 umfasst vorzugsweise ein Content-Management-System.

Das Empfehlungssystem 50 weist ein Konsumentenmodul 122 auf. Das Konsumentenmodul 122 dient zur Verwaltung von Konsumentenprofilen der Konsumenten 68 und zur Zusammenstellung und Konfiguration von Profillisten durch den Administrator bzw. Redakteur 86. Ein Inhaltsmodul 128 dient zur Verwaltung und Konfiguration von Inhaltslisten, in denen von dem Inhaltssystem 116 bereitgestellte Inhalte durch Vorgabe von Themen und Themenkategorien durch den Redakteur 86 zu Inhaltslisten zusammengeführt werden können. Basierend auf einer redakteurseitigen Verknüpfung von jeweils einer (oder mehrerer) Profillisten und einer oder mehrerer Inhaltslisten (bevorzugt wird jeweils eine Profilliste mit jeweils einer Inhaltsliste verknüpft) ist ein Empfehlungsmodul 134 vorgesehen. Das Empfehlungsmodul 134 ordnet den Konsumenten, deren Profil in der entsprechenden Profilliste abgelegt ist, die entsprechende Empfehlung zu. Dargestellt ist an dieser Stelle jeweils nur ein Konsument 68 bzw. ein Redakteur 86.

Aus datenschutzrechtlichen Gründen ist es wichtig bzw. notwendig, dass die einzelnen Konsumenten nicht mit ihren wirklichen Namen bzw. entsprechenden Klartextinformationen im System verwaltet werden. Dies ist auch gar nicht notwendig, sofern nur jeder Konsument eindeutig identifizierbar und zuordenbar ist. In einem Anonymisierungsmodul 140 wird daher jedem Konsumenten 68 eine eindeutige Konsumentenkennung zugewiesen, die für alle weiteren Operationen in dem System, insbesondere die Bereitstellung von Empfehlungen für diesen Konsumenten 68, verwendet wird. Diese Konsumentenkennung wird also einem gewissen Konsumentenprofil bzw. Konsumentenaccount zugewiesen und bei der Interaktion des Benutzers bzw. Konsumenten 68 mit dem jeweiligen Medienkanalkönnen ihm so die für ihn generierten Empfehlungen bereitgestellt werden.

Das Anonymisierungsmodul 140 hat eine Zusatzfunktionalität, durch die separate Konsumentenprofile, die mit hoher Wahrscheinlichkeit zu demselben Konsumenten 68 korrespondieren, zusammengefasst werden können. Dazu sind jedem Konsumentenprofil gewisse Schlüsselwerte zugeordnet, welche insbesondere aus Attributen gebildet werden, wobei bei einer Übereinstimmung vorgegebener Schlüsselwerte in zwei Konsumentenprofilen diese als demselben Konsumenten 68 zugehörig eingestuft werden und entsprechend zusammengeführt werden, so dass auch nur eine Konsumentenkennung notwendig wird. Beispielsweise können zwei Profile bei vollständiger Übereinstimmung von Namen, Adresse und Telefonnummer sowie Geburtsdatum zusammengeführt werden. Eine derartige Funktionalität ist insbesondere aufgrund der crossmedialen Auslegung des Empfehlungssystems 50 wichtig, was nachfolgend noch besprochen werden wird.

In gewissen Fällen ist eine Rückumwandlung der Konsumentenkennung in Klartextinformationen des Konsumenten, wie beispielsweise sein Name und seine Adresse, notwendig. Dazu ist ein Deanonymisierungsmodul 146 vorgesehen, welches mit einer Konsumentenkennung angefragt werden kann und das entsprechende Konsumentenprofil bzw. die entsprechenden Konsumentenattribute zurückgibt. Auch diese Funktionalität ist - wie unten gezeigt wird - wesentlich für die crossmediale Auslegung des Empfehlungssystems 50.

Das Empfehlungssystem 50 weist eine Mehrzahl von Schnittstellen 160,166,172 für die Bereitstellung von Empfehlungen in unterschiedlichen Medien bzw. Medienkanälen auf.

Der Konsument 68 interagiert über diese Schnittstellen 160, 166, 172 und/oder konsumiert über sie Inhalte, was jeweils durch einen Doppelpfeil 80 dargestellt ist. In einer derartigen Schnittstelle kann sich der Konsument 68 das erste Mal anmelden bzw. registrieren, sein Konsumentenprofil erstellen und Inhalte konsumieren bzw. mit diesen interagieren.

Die Schnittstelle 160 dient im vorliegenden Beispiel der Bereitstellung von Empfehlungen auf einer Webseite, die dem Konsumenten68 bei seiner Verbindung mit der Webseite angezeigt wird. Die Schnittstelle 166 liefert die entsprechenden Empfehlungen an einen Newsletter, der von dem Konsumenten 68 abonniert wurde. Die Schnittstelle 172 dient zur Übermittlung der Empfehlungen an ein Printmedium, beispielsweise ein monatlich erscheinendes Magazin, welches der Konsument 68 abonniert hat. Die Schnittstellen 160,166,172 (oder auch andere Module) formatieren und passen die Empfehlungen derart an, dass sie für das entsprechende Medium geeignet sind. Eine Empfehlung kann beispielsweise in der Schnittstelle 160 zur Webseite als Textbild oder auch Film dargestellt werden, während sie in dem Newsletter vielleicht nur als formatierter Text erscheint und in dem Printmedium sowohl Bild als auch Text verwendet werden.

Die Schnittstellen 160, 166, 172 des Empfehlungssystems 50 sind mit REST (Representational State Transfer) Services umgesetzt. Diese bieten eine schnelle und einfache Schnittstelle auf dem HTTP Protokoll, die von jeder beliebigen Programmiersprache angesprochen werden können, sofern diese HTTP Verbindungen aufbauen können, was auf die meisten Hochsprachen zutrifft. Als Austauschformat wird XML (Extensible Markup Language) verwendet.

In jedem der verschiedenen Medien hat der Konsument 68 gegebenenfalls ein Profil angelegt und gewisse Konsumentenattribute hinterlegt. Durch die oben beschriebene Funktionalität des Anonymisierungsmoduls 140 können diese Profile zusammengefasst werden, so dass zukünftige Interaktionen in all diesen Medien für Empfehlungen berücksichtigt werden können und Empfehlungen in eben diesen Medien den Konsumenten erreichen können.

Eine Personalisierung des Print-Magazins mit Empfehlungen für den Konsumenten 68 kann beispielsweise derart gestaltet werden, dass das Magazin mit einem personalisierten Einband oder Umschlag versehen wird. An dieser Stelle ist ein Aufruf des Deanonymisierungsmoduls 146 notwendig, da das Magazin an die postalische Adresse des Konsumenten 68 geschickt werden muss, so dass den generierten Empfehlungen Name und Adresse des Konsumenten an dieser Stelle zugeordnet werden müssen.

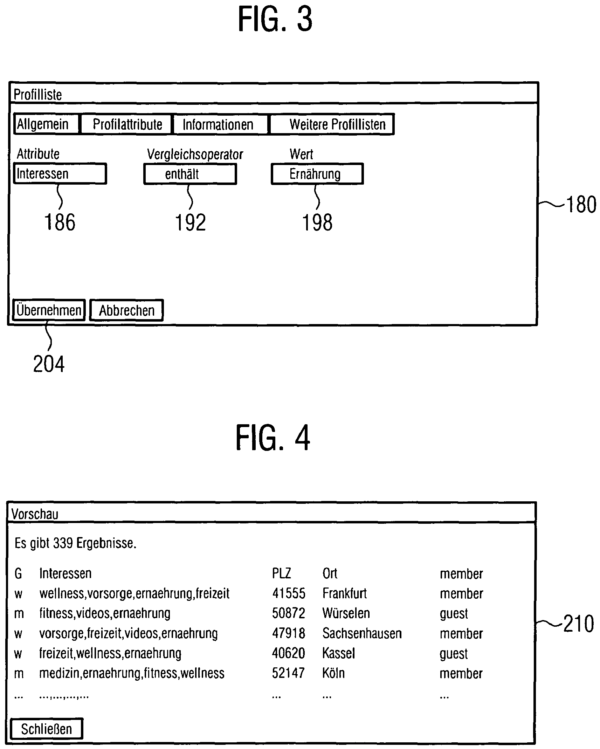

Die Verfahrensschritte, die zur Erstellung einer Empfehlung führen, sollen anhand der Figuren 3 bis 7 beispielhaft erläutert werden. In Fig. 3 ist eine Eingabemaske 180 dargestellt, wie sie von dem Empfehlungssystem 50 gemäß Fig. 2 in der Redaktionsschnittstelle 92 bereitgestellt wird. Der Redakteur 86 kann in einem Eingabefeld 186 ein Konsumentenattribut auswählen (hier "Interessen"), welches er mittels eines Auswahlmenüs 192 für Vergleichsoperatoren mit einem Konsumentenattribut verknüpfen kann. Zur Eingabe des Konsumentenattributes stellt das Empfehlungssystem 50 ein Eingabefeld 198 zur Verfügung, im vorliegenden Beispiel erfolgte die Eingabe "Ernährung". Der gewählte Vergleichsoperator ist hierbei "enthält". Durch Anklicken des Buttons bzw. der Schaltfläche 204 wird das Empfehlungssystem 50 veranlasst, diese Eingabe zu verarbeiten. Es erstellt nun eine Profilliste von Konsumentenprofillisten, deren Attribut "Interessen" den Wert "Ernährung" enthält. Diese Profilliste wird in der Redaktionsschnittstelle 92 bereitgestellt. Eine in Fig. 4 dargestellte Ausgabe 210 dieser Profilliste in Form einer Vorschau listet verschiedene Attribute der Profile in dieser Profilliste: das Geschlecht, die Interessen, die PLZ, den Wohnort und einen Mitgliedsstatus.

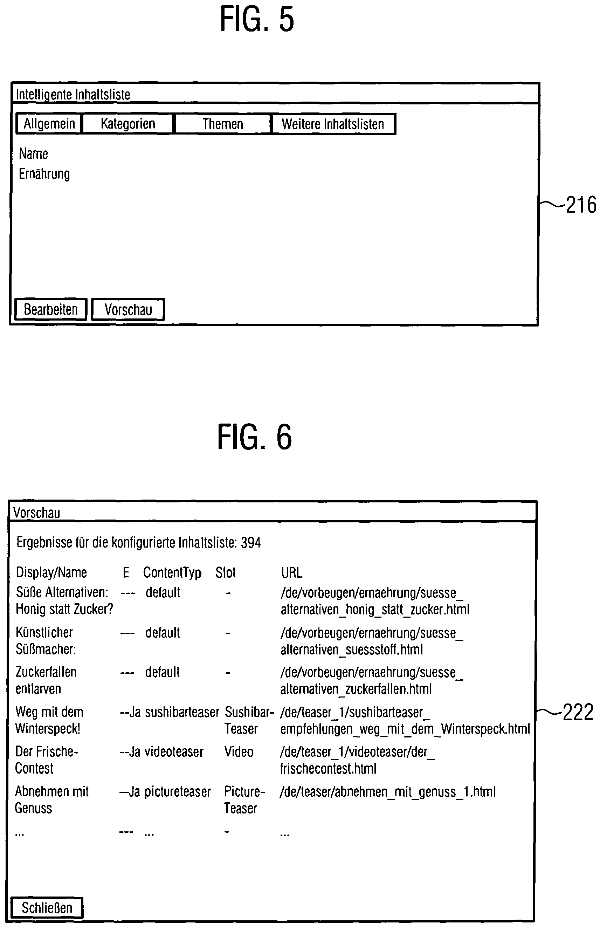

Das Empfehlungssystem 50 stellt, wie in Fig. 5 dargestellt, dem Redakteur 86 nun eine Eingabemaske 216 zur Eingabe wenigstens eines Themas, hier "Ernährung", zur Verfügung. Eine vom Empfehlungssystem 50 bereitgestellte Ausgabe 222 der korrespondierenden Inhaltsliste ist in Fig. 6 dargestellt. Dort werden die vorhandenen Themen "Ernährung" genannt zusammen mit ihrem ContentTyp und ihrer URL.

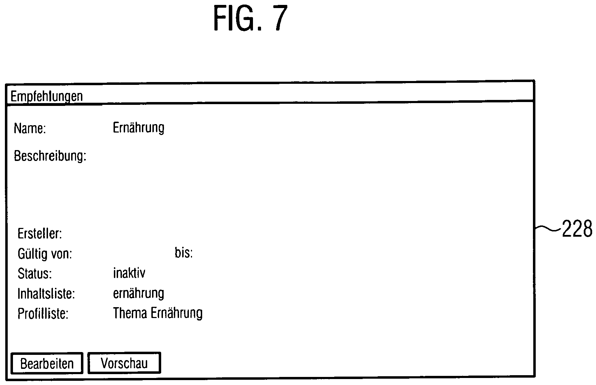

Das Empfehlungssystem 50 stellt nun eine in Fig. 7 dargestellte Eingabemaske 228 zur Verfügung, in der die erstellten Listen (Profilliste, Inhaltsliste) verknüpft werden können. Daraus resultieren dann Empfehlungen, welche den in der Profilliste enthaltenen Konsumentenprofilen in den jeweiligen Medien bereitgestellt werden. Vor dem Erstellen der Empfehlung können Profilliste und Inhaltsliste von dem Redakteur noch weiter bearbeitet werden, wenn er das Empfehlungssystem 50 auffordert, ihm noch weitere Eingabemasken zur Bearbeitung zur Verfügung zu stellen.

Das Empfehlungssystem 50 weist vorteilhafterweise noch weitere Schnittstellen auf, über die sich jeweils Personen mit unterschiedlichen Aufgabebereichen und Privilegien mit dem System verbinden können. Neben dem Redakteur 86 ist dabei vorzugsweise auch ein Verwalter vorgesehen, der ebenso wie dieser Empfehlungen generieren kann und dazu Profil- und Inhaltslisten anlegen kann. Er kann zusätzlich Themen in dem Inhaltsmodul 128 in einem Themenbaum anlegen, bearbeiten und löschen. Er kann darüber hinaus Profilattribute anlegen, bearbeiten und löschen. Der Verwalter kann vorteilhafterweise auch neue Interaktionen im Empfehlungssystem 50 anlegen, wie beispielsweise Interaktionen, die aus Printmedien kommen. Über den Verwalter können vorzugsweise auch neue Kategorien für Themen angelegt werden, beispielsweise Autor oder auch Zielgruppe eines Angebotes.

Es kann weiterhin die Funktion eines Administrators vorgesehen sein, welcher zusätzlich zu den oben genannten Aufgaben auch Mandanten anlegen kann, für die das Empfehlungssystem 50 konfiguriert werden soll. Die Mandantenspezifischen Inhalte werden dann in das entsprechend angepasste Empfehlungssystem 50 eingepflegt. Der Administrator kann ferner Zugänge für Redakteure und Verwalter und ggf. weitere Administratoren einrichten und freischalten.

### Bezugszeichenliste

- 2, 8, 14, 20, 26, 32, 38: Block
- 50: Empfehlungssystem
- 56: gestrichelter Kasten
- 62: Zentralmodul
- 68: Konsument
- 80: Doppelpfeil
- 86: Redakteur
- 92: Redaktionsschnittstelle
- 98: Doppelpfeil
- 104: Datenbank
- 110: Inhaltsschnittstelle
- 116: Inhaltssystem
- 122: Konsumentenmodul
- 128: Inhaltsmodul
- 134: Empfehlungsmodul
- 140: Anonymisierungsmodul
- 146: Deanonymisierungsmodul
- 160, 166, 172: Schnittstelle
- 180: Eingabemaske
- 186: Eingabefeld
- 192: Auswahlmenü
- 198: Eingabefeld
- 204: Schaltfläche
- 210: Ausgabe
- 216: Eingabemaske
- 222: Ausgabe
- 228: Eingabemaske

## Patentansprüche

1. Server-basiertes Informationssystem (50), welches wenigstens eine Schnittstelle (160, 166, 172) zu einem Medienkanal aufweist, in dem Konsumenten Inhalte bereitgestellt werden, mit einer clientseitigen Redaktionsschnittstelle (92) zur Interaktion mit einem Redakteur, und mit technischen Mitteln zur Durchführung der Verfahrensschritte:
1. Erstellen eines Konsumentenprofils für den jeweiligen Konsumenten, wobei jedem Konsumenten eine Anzahl von Konsumentenattributen zuordenbar ist
2. Bereitstellen einer Eingabemaske (180) in der Redaktionsschnittstelle (92) zum Entgegennehmen einer Eingabe wenigstens eines Konsumentenattributes
3. Erstellen einer Profilliste von Konsumentenprofilen, auf die dieses wenigstens Konsumentenattribut zutrifft und Bereitstellung der Profilliste in der Redaktionsschnittstelle (92)
4. Bereitstellung einer Eingabemaske (216) in der Redaktionsschnittstelle (92) zum Entgegennehmen einer Eingabe wenigstens eines Themas
5. Erstellen einer Inhaltsliste von Inhalten, auf die dieses wenigstens eine Thema zutrifft und Bereitstellung der Inhaltsliste in der Redaktionsschnittstelle (92)
6. Bereitstellen einer Eingabemaske (228) zur Verknüpfung der Profilliste und der Inhaltsliste in der Redaktionsschnittstelle (92)
7. Ausgabe, insbesondere in dem jeweiligen Mediankanal, der Inhalte der Inhaltsliste basierend auf dieser Verknüpfung für die Konsumenten mit Konsumentenprofilen in der Profilliste

2. Informationssystem (50) nach Anspruch 1, welches die Interaktionen eines Konsumenten mit in einem Mediakanal bereitgestellten Inhalten, insbesondere die Auswahl von Themen, verfolgt und/oder protokolliert und diese Interaktionen neben den Konsumentenattributen zur Erstellung der Profilliste bereitstellt.

3. Informationssystem (50) nach Anspruch 1 oder 2, welches eine Anzahl von Konsumentenattributen, insbesondere Alter und Geschlecht, bereits beim erstmaligen Kontakt des Konsumenten mit dem jeweiligen Medienkanal erfasst.

4. Informationssystem (50) nach einem der Ansprüche 1 bis 3, wobei jeweils verschiedene Konsumentenattribute zur Bildung der Profilliste und/oder jeweils verschiedene Themen zur Bildung der Inhaltsliste logisch und/oder regulär miteinander verknüpft werden.

5. Informationssystem (50) nach einem der Ansprüche 1 bis 4, welches die Darstellung und Aufbereitung der ausgegeben Inhalte an den jeweiligen Medienkanal anpasst.

6. Informationssystem (50) nach einem der Ansprüche 1 bis 5, wobei intelligente Profillisten und/oder Inhaltslisten erstellt werden, die fortlaufend aktualisiert werden.

7. Informationssystem (50) nach einem der Ansprüche 1 bis 6 mit einer Schnittstelle (110) und Mitteln zur Einspeisung und Kategorisierung von Inhalten.

8. Informationssystem (50) nach einem der Ansprüche 1 bis 7, wobei die Redaktionsschnittstelle (92) webbrowserbasiert ausgeführt ist.

9. Informationssystem (50) nach einem der Ansprüche 1 bis 8, wobei eine Datenbank (104) zur Speicherung der den Verknüpfungen zugrunde liegenden Daten vorgesehen ist.

10. Informationssystem (50) nach einem der Ansprüche 1 bis 9, wobei eine Mehrzahl von Schnittstellen (160, 166, 172) zu, insbesondere unterschiedlichen, Medienkanälen vorgesehen ist.

11. Informationssystem (50) nach einem der Ansprüche 1 bis 10, wobei ein Anonymisierungsmodul (140) vorgesehen ist, welches für einen Konsumenten eine Konsumentenkennung generiert und diese dem Konsumentenprofil zuordnet, und wobei ausschließlich diese Konsumentenkennung für alle Operationen mit dem Konsumentenprofil und das Verfolgen der Konsumenteninteraktionen verwendet wird.

12. Informationssystem (50) nach Anspruch 11, wobei das Anonymisierungsmodul (140) jedem Konsumentenprofil eine Anzahl von Schlüsselwerten, welche insbesondere Konsumentenattribute umfassen, zuordnet, und wobei Konsumentenprofile, bei denen eine vorgegebene Anzahl von Schlüsselwerten übereinstimmt, zusammengefasst werden und eine identische Konsumentenkennung erhalten.

13. Informationssystem (50) nach Anspruch 11 oder 12, wobei ein Deanonymisierungsmodul (146) vorgesehen ist, welches bei Bedarf das zu der Konsummentenkennung korrespondierende Konsumentenprofil bereitstellt.

## Geänderte Patentansprüche

### Geänderte Patentansprüche gemäss Regel 137(2) EPÜ.

**1.** Server-basiertes Empfehlungssystem (50), welches wenigstens eine Schnittstelle (160, 166, 172) zu einem Medienkanal aufweist, in dem Konsumenten Inhalte bereitgestellt werden, mit einer clientseitigen Redaktionsschnittstelle (92) zur Interaktion mit einem Redakteur, und mit technischen Mitteln zur Durchführung der Verfahrensschritte:
1. Erstellen eines Konsumentenprofils für den jeweiligen Konsumenten, wobei jedem Konsumenten eine Anzahl von Konsumentenattributen zuordenbar ist
2. Bereitstellen einer Eingabemaske (180) in der Redaktionsschnittstelle (92) zum Entgegennehmen einer Eingabe wenigstens eines Konsumentenattributes
3. Erstellen einer Profilliste von Konsumentenprofilen, auf die dieses wenigstens Konsumentenattribut zutrifft und Bereitstellung der Profilliste in der Redaktionsschnittstelle (92)
4. Bereitstellung einer Eingabemaske (216) in der Redaktionsschnittstelle (92) zum Entgegennehmen einer Eingabe wenigstens eines Themas
5. Erstellen einer Inhaltsliste von Inhalten, auf die dieses wenigstens eine Thema zutrifft und Bereitstellung der Inhaltsliste in der Redaktionsschnittstelle (92)
6. Bereitstellen einer Eingabemaske (228) zur Verknüpfung der Profilliste und der Inhaltsliste in der Redaktionsschnittstelle (92)
7. Ausgabe, insbesondere in dem jeweiligen Mediankanal, der Inhalte der Inhaltsliste basierend auf dieser Verknüpfung für die Konsumenten mit Konsumentenprofilen in der Profilliste,
welches die Darstellung und Aufbereitung der ausgegeben Inhalte an den jeweiligen Medienkanal anpasst und die technischen Dimensionierung des entsprechenden Mediums berücksichtigt, wobei eine Mehrzahl von Schnittstellen (160, 166, 172) zu unterschiedlichen Medienkanäien vorgesehen ist, und wobei ein Anonymisierungsmodul (140) vorgesehen ist, welches für einen Konsumenten eine Konsumentenkennung generiert und diese dem Konsumentenprofil zuordnet, und wobei ausschließlich diese Konsumentenkennung für alle Operationen mit dem Konsumentenprofil und das Verfolgen der Konsumenteninteraktionen verwendet wird, wobei das Anonymisierungsmodul (140) jedem Konsumentenprofil eine Anzahl von Schlüsselwerten, welche insbesondere Konsumentenattribute umfassen, zuordnet, und wobei Konsumentenprofile, bei denen eine vorgegebene Anzahl von Schlüsselwerten übereinstimmt, zusammengefasst werden und eine identische Konsumentenkennung erhalten.

**2.** Empfehlungssystem (50) nach Anspruch 1, welches die Interaktionen eines Konsumenten mit in einem Mediakanal bereitgestellten Inhalten, insbesondere die Auswahl von Themen, verfolgt und/oder protokolliert und diese Interaktionen neben den Konsumentenattributen zur Erstellung der Profilliste bereitstellt.

**3.** Empfehlungssystem (50) nach Anspruch 1 oder 2, welches eine Anzahl von Konsumentenattributen, insbesondere Alter und Geschlecht, bereits beim erstmaligen Kontakt des Konsumenten mit dem jeweiligen Medienkanal erfasst.

**4.** Empfehlungssystem (50) nach einem der Ansprüche 1 bis 3, wobei jeweils verschiedene Konsumentenattribute zur Bildung der Profilliste und/oder jeweils verschiedene Themen zur Bildung der Inhaltsliste logisch und/oder regulär miteinander verknüpft werden.

**5.** Empfehlungssystem (50) nach einem der Ansprüche 1 bis 4, wobei intelligente Profillisten und/oder Inhaltslisten erstellt werden, die fortlaufend aktualisiert werden.

**6.** Empfehlungssystem (50) nach einem der Ansprüche 1 bis 5 mit einer Schnittstelle (110) und Mitteln zur Einspeisung und Kategorisierung von Inhalten.

**7.** Empfehlungssystem (50) nach einem der Ansprüche 1 bis 6, wobei die Redaktionsschnittstelle (92) webbrowserbasiert ausgeführt ist.

**8.** Empfehlungssystem (50) nach einem der Ansprüche 1 bis 7, wobei eine Datenbank (104) zur Speicherung der den Verknüpfungen zugrunde liegenden Daten vorgesehen ist.

**9.** Empfehlungssystem (50) nach einem der Ansprüche 1 bis 8, wobei ein Deanonymisierungsmodul (146) vorgesehen ist, welches bei Bedarf das zu der Konsumentenkennung korrespondierende Konsumentenprofil bereitstellt.
